Europäisches Patentamt

**European Patent Office**

Office européen des brevets

(11) Numéro de publication : **0 274 301 B1**

(12) **FASCICULE DE BREVET EUROPEEN**

(45) Date de publication du fascicule du brevet :
**20.02.91 Bulletin 91/08**

(21) Numéro de dépôt : **87402729.5**

(22) Date de dépôt : **02.12.87**

(51) Int. Cl.⁵ : **A23L 1/072,** A23L 1/0532,
B01F 13/10

(54) **Produit alimentaire reconstitué, procédé et mélangeur pour sa préparation.**

(30) Priorité : **11.12.86 FR 8617463**

(43) Date de publication de la demande :
**13.07.88 Bulletin 88/28**

(45) Mention de la délivrance du brevet :
**20.02.91 Bulletin 91/08**

(84) Etats contractants désignés :
**AT BE CH DE ES GB GR IT LI LU NL SE**

(56) Documents cités :
**BE-A- 369 967
FR-A- 2 114 706
GB-A- 816 093
GB-A- 1 369 199
PATENT ABSTRACTS OF JAPAN, vol. 5, no. 85
(C-57)[757], 3 juin 1981 ; & JP-A-56 29 968 (TOS-
HIYUKI OOTA) 25-03-1981**

(73) Titulaire : **ETUDE RECHERCHE ET
DEVELOPPEMENT E.R.D. SARL
La Julienne Le Grès
F-84100 Orange (FR)**

(72) Inventeur : **Olivier, Denis
Chemin de Mulets
F-84300 Les Taillades (FR)**
Inventeur : **Guigou, Bernard
Quartier Saint Michel
F-84400 Apt (FR)**
Inventeur : **Bouillette, Thierry
La Julienne Le Grès
F-84100 Orange (FR)**

(74) Mandataire : **Bugnon-Hays, Claudine
PATCO S.A. 39, Boulevard René Cassin B.P.4
F-84170 Monteux (FR)**

Jouve, 18, rue Saint-Denis, 75001 PARIS

## Description

La présente invention concerne un produit alimentaire et en particulier des morceaux de fruits reconstitués et un procédé pour la fabrication d'un tel produit.

On connait depuis longtemps des fruits reconstitués réalisés à partir d'un extrait ou d'un concentré de fruit auquel on mélange un produit gélifiant contenant un alginate.

Le brevet français n° 2 087 852 par exemple décrit des morceaux de fruits reconstitués constitués de corps sensiblement sphériques d'un concentré de fruits présentant une peau extérieure gélifiée. Suivant ce brevet, la peau est constituée d'un gel d'un alginate ou pectate de calcium ou d'aluminium. Le brevet français n° 2 087 852 concerne également un procédé pour la préparation de tels produits alimentaires reconstitués. Suivant ce procédé, on incorpore d'abord au produit alimentaire, des ions de calcium ou d'aluminium en solution. Ensuite, on forme des gouttes de ce mélange fluide et on amène ces gouttes en contact avec un sol d'alginate ou de pectate pour former ladite peau extérieure gélifiée.

Un tel procédé ne permet pas de produire des fruits reconstitués gélifiés dans leur masse et qui ait ainsi la même consistance qu'un fruit naturel. De plus, ce procédé connu ne permet pas d'incorporer dans le concentré de fruits un produit alcoolisé car celui-ci empêcherait la formation de la peau gélifiée.

Le brevet français n° 2 114 706 décrit des fruits reconstitués qui paraissent au moins partiellement gélifiés dans leur masse. Le procédé de préparation des fruits reconstitués suivant ce brevet comporte essentiellement trois phases qui consistent :

a) A préparer un premier mélange d'alginate ou de méthoxypectate inférieur et d'un composé de calcium comprenant insuffisamment d'ions de calcium libres pour provoquer une gélification et

b) A incorporer à ce premier mélange le dérivé de fruit en présence d'un agent de gélification notamment un acide (acide malique 0,51%, acide ascorbique 0,10% ou acide citrique 1,20%). Cet acide a pour fonction de provoquer la libération des ions de calcium du composé de calcium contenu dans le premier mélange (phosphate dicalcique) ;

c) A laisser gélifier le mélange a) + b) obtenu.

Dans ce brevet, il est exposé (page 3, lignes 23 à 28) que lors de la combinaison des mélanges a) et b), la gélification entre les ions de calcium et de l'alginate est tellement rapide que le calcium ne peut pas se répartir dans la totalité de la masse d'alginate avant qu'une gélification importante n'ait eu lieu de sorte que le gel a une texture très inégale. Pour remédier à cet inconvénient, le brevet propose l'incorporation dans le système d'un agent comestible complexant le calcium tel que le citrate trisodique.

Mais ceci demande ensuite des précautions particulières dans l'exécution du mélange des produits a) et b).

De plus, la pratique a montré que malgré l'agent complexant, le calcium et les précautions lors du mélange, le brevet français n° 2 114 706 ne permet pas de réaliser des fruits reconstitués gélifiés dans leur masse d'une manière parfaitement uniforme comme souhaité par le consommateur.

La présente invention a pour objet de concevoir la composition et la préparation d'un produit alimentaire reconstitué parfaitement et régulièrement gélifié dans sa masse et qui permet d'incorporer un alcool de fruit dénaturé.

Le produit selon l'invention contient en poids :
de l'ordre de 1 à 30% d'un alcool de fruit ou naturel dénaturé
de l'ordre de 15 à 50% d'un concentré de fruit
de l'ordre de 5 à 30% de sucre
de l'ordre de 0,5 à 3% d'un alginate.

De préférence, le produit selon l'invention comporte de plus, de l'ordre de 0,2 à 2% en poids d'un composé de calcium tel qu'un phosphate dicalcique anhydre.

Le concentré de fruit est de préférence constitué d'une pulpe ou d'une compote d'un fruit. L'alcool de fruit dénaturé est de préférence réalisé à base du même fruit que la pulpe ou la compote de fruit.

L'invention concerne également un procédé pour la préparation d'un tel produit selon l'invention.

Le procédé selon l'invention consiste à préparer un alcool dénaturé d'un degré alcoolique de l'ordre de 45° à 55°, à préparer un premier mélange contenant l'alcool, le concentré de fruit et une partie du sucre, à préparer un deuxième mélange contenant l'alginate et le restant du sucre et à désaérer et laisser reposer le deuxième mélange pendant environ 30 minutes et à mélanger le premier mélange et le deuxième mélange dans un dispositif mélangeur. Lorsque l'on utilise un composé de calcium, celui-ci est ajouté audit deuxième mélange.

Suivant un mode de réalisation préféré, le procédé selon l'invention consiste à réaliser à partir du mélange final obtenu des corps de dimensions régulières et à plonger les corps ainsi obtenus dans un bain contenant de l'ordre de 2 à 15% en poids de calcium et de l'ordre de 10% à 35% en poids de sucre.

Lesdits corps sont formés d'un manière connue par moulage ou extrusion.

L'invention concerne également un mélangeur statique pour la mise en oeuvre du procédé selon l'invention et qui est notamment destiné à assurer un mélange intime dudit premier mélange provenant d'une première cuve de stockage avec ledit deuxième mélange provenant d'une deuxième cuve de stockage, lesdits mélanges étant envoyés audit mélangeur sous une pression prédéterminée.

Le mélangeur selon l'invention comporte un corps cylindrique fermé à ses extrémités par des embouts ou brides traversées par des canalisations d'arrivée des deux dits mélanges à combiner et qui comporte au voisinage de l'une de ses extrémités axiales un raccord d'évacuation radial, les canalisations d'arrivée traversant sensiblement toute la longueur du corps cylindrique et portant à leurs extrémités libres situées l'une en regard de l'autre des buses d'injection, la canalisation d'arrivée pour ledit deuxième mélange comportant au voisinage de son extrémité libre un ensemble de chicanes radiales dont la chicane extrême opposée à l'extrémité libre de la canalisation communique avec ledit raccord d'évacuation radial du corps cylindrique.

Suivant un mode de réalisation avantageux du mélangeur suivant l'invention, les extrémités libres des canalisations d'arrivée comportent chacune une paire de déflecteurs axiaux opposés, les paires de déflecteurs étant décalées de 90° l'une par rapport à l'autre de sorte à délimiter une chambre de mélange dans laquelle débouchent lesdites buses. De préférence, les extrémités libres des déflecteurs de l'une desdites paires de déflecteurs sont recourbées en direction de l'axe longitudinal de la canalisation d'arrivée correspondante.

Selon un mode de réalisation préféré, ledit ensemble de chicanes comporte au moins trois disques calés sur ladite canalisation d'arrivée espacés les uns des autres axialement, et dont le premier présente au voisinage de son bord extérieur une série de perforations régulièrement espacées, le deuxième disque présentant à son bord extérieur une série d'encoches radialement régulièrement espacées tandis que le troisième disque comporte une série d'encoches radiales communiquant chacune avec une cavité radiale s'étendant en regard de l'extrémité intérieure dudit raccord d'évacuation.

Le mélangeur selon l'invention est d'une structure particulièrement simple et peu coûteuse. Il assure au niveau des buses et des déflecteurs, un premier mélange. L'homogénéité de ce premier produit de mélange est encore améliorée lors de son passage à travers ledit ensemble de chicanes. La configuration particulière suivant l'invention de ces chicanes s'est montrée dans la pratique très efficace et ceci contre toute attente de l'homme de l'art.

On trouvera, ci-après, à titre d'exemples, plusieurs compositions préférées du produit selon l'invention.

Exemple 1

1er mélange (fruit)

– compote de pomme
18,00% en poids
– compote d'abricot
22,00% en poids

– sucre cristallisé
6,15% en poids
– alcool d'abricot épaissi
3,50% en poids
– citrate trisodique
0,35% en poids

2ème mélange (alginate)

– alginate de sodium
1,00% en poids
– phosphate dicalcique anhydre
0,30% en poids
– sucre cristallisé
13,70% en poids
– eau
35,00% en poids.

Exemple 2

1er mélange (fruit)

– jus pulpeux d'orange
30,00% en poids
– compote de pomme
10,00% en poids
– sucre cristallisé
6,60% en poids
– whisky épaissi
3,00% en poids
– citrate trisodique
0,40% en poids

2ème mélange (alginate)

– alginate de sodium
1,00% en poids
– phosphate dicalcique anhydre
0,35% en poids
– sucre cristallisé
13,65% en poids
– eau
35,00% en poids

Exemple 3

1er mélange (fruit)

– compote de poire William
42,00% en poids
– sucre cristallisé
5,00% en poids
– alcool de poire William épaissi
2,50% en poids
– citrate trisodique
0,30% en poids
– acide citrique
0,20% en poids

2ème mélange (alginate)

– alginate de sodium
1,00% en poids
– phosphate dicalcique anhydre
0,30% en poids
– sucre cristallisé
13,70% en poids
– eau
35,00% en poids.

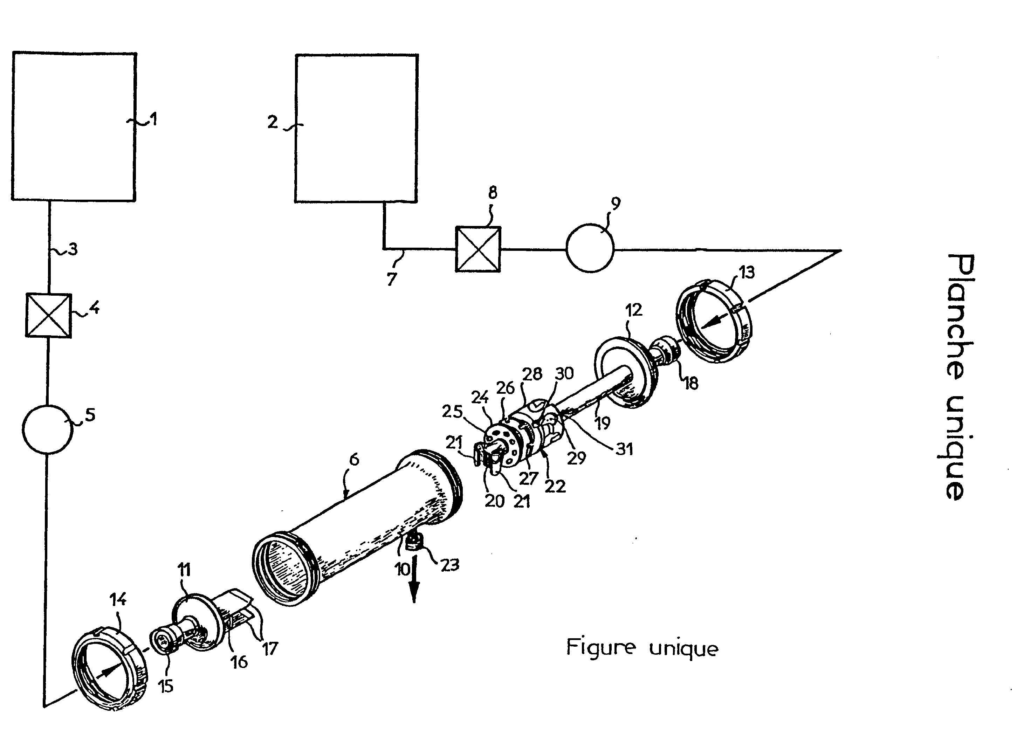

La figure unique annexée montre une vue schématique partiellement en perspective éclatée d'une installation comportant un mélangeur statique selon l'invention pour la mise en oeuvre du procédé selon l'invention.

L'installation représentée ici comporte une première cuve de stockage (1) contenant le premier mélange suivant l'invention, comprenant essentiellement le concentré de fruit et une deuxième cuve de stockage (2) contenant le deuxième mélange selon l'invention, comprenant essentiellement l'alginate.

La canalisation d'évacuation (3) de la cuve (1) est reliée à travers une vanne (4) et une pompe de refoulement (5) à l'une des entrées d'un mélangeur statique selon l'invention portant la référence générale (6).

La canalisation d'évacuation (7) de la cuve (2) est reliée à travers une vanne (8) et une pompe de refoulement (9) à l'autre entrée du mélangeur (6).

Le mélangeur selon l'invention représenté ici en perspective éclatée, comporte essentiellement un corps cylindrique (10) ouvert à ses deux extrémités, pouvant être fermé par deux embouts (11, 12) à l'aide d'une collerette filetée (13, 14).

L'embout (11) situé du côté de la cuve (1) porte un raccord (15) dont l'extrémité intérieure débouche sur une buse (16) disposée entre deux déflecteurs longitudinaux (17). L'embout (12) situé du côté de la cuve (2) comporte également un embout ou raccord (18) dont l'extrémité intérieure est reliée à un tube (19) traversant sensiblement toute la longueur du corps (10) du mélangeur jusqu'au voisinage direct des déflecteurs (17) de l'embout (11).

A son extrémité libre, le tube (19) comporte une buse (20) également disposée entre deux déflecteurs (21) qui sont décalés d'un angle de 90° par rapport aux déflecteurs (17) et présentent une section arrondie. Sur le tube (19), est prévu au voisinage direct de la buse (20) un ensemble de chicanes portant la référence générale (22). L'extrémité arrière de cet ensemble (22) est située en regard d'un raccord d'évacuation radial (23) prévu sur le corps cylindrique.

Suivant le mode de réalisation préféré représenté ici, l'ensemble de chicanes (22) comporte un premier disque (24) calé sur le tube (19) qui comporte une série de perforations (25), un deuxième disque (26) comportant à sa périphérie, une série d'encoches (27) régulièrement espacées et un troisième disque (28) comportant une série de cavités (29). Ces cavités débouchent par une partie (30) sur la face radiale du disque (28) et une partie à section sensiblement circulaire (31) sur la face extérieure circonférentielle du disque.

En fonctionnement, le premier et le deuxième mélanges sont envoyés à partir des cuves (1, 2) à l'aide des pompes (5, 9) sous pression dans le mélangeur, traversent les embouts et sont distribués à travers les buses (16, 20) respectivement.

Grâce aux déflecteurs (17, 21) disposés autour des buses, on obtient un premier mélange des deux produits.

Ensuite, ce premier mélange s'écoule à travers l'ensemble des chicanes (22) pour être évacué à travers le raccord (23).

Grâce à la configuration particulière de l'ensemble des chicanes (22), on obtient un mélange particulièrement homogène des deux produits de base constitués par le premier et le deuxième mélanges suivant l'invention.

Le mélangeur suivant l'invention est d'une structure relativement simple. Son nettoyage et son entretien sont faciles.

Bien entendu, l'invention n'est pas limitée aux modes de réalisation décrits et représentés ici mais on peut y apporter de nombreuses modifications sans pour cela sortir du cadre de l'invention.

## Revendications

1. Produit alimentaire se présentant notamment sous forme de morceaux de fruit, du type contenant un concentré de fruit et un produit gélifiant, caractérisé en ce qu'il contient en poids :
   de l'ordre de 1 à 30% d'un alcool de fruit ou naturel dénaturé
   de l'ordre de 15 à 50% d'un concentré de fruit
   de l'ordre de 5 à 30% de sucre
   de l'ordre de 0,5 à 3% d'un alginate.

2. Produit suivant la revendication 1, caractérisé en ce qu'il comporte de plus de l'ordre de 0,2% à 2% en poids d'un composé de calcium tel qu'un phosphate dicalcique anhydre.

3. Produit suivant l'une quelconque des revendications 1 et 2, caractérisé en ce que le concentré de fruit est une pulpe de fruit.

4. Produit suivant l'une quelconque des revendications 1 et 2, caractérisé en ce que le concentré de fruit est une compote de fruit.

5. Procédé pour la préparation d'un produit alimentaire suivant l'une quelconque des revendications 1, 3 ou 4, caractérisé en ce qu'il consiste à préparer un alcool dénaturé d'un degré alcoolique de l'ordre de 45° à 55°, à préparer un premier mélange contenant l'alcool, le concentré de fruit et une partie du sucre, à préparer un deuxième mélange contenant l'alginate et le restant du sucre et à désaérer et laisser reposer ce deuxième mélange pendant environ 30 minutes et à mélanger le premier mélange et le deuxième mélange dans un dispositif mélangeur.

6. Procédé suivant la revendication 5, caractérisé en ce qu'il consiste à ajouter pour la préparation du produit suivant la revendication 2, le composé de calcium audit deuxième mélange.

7. Procédé suivant la revendication 5, caractérisé en ce qu'il consiste à réaliser à partir du mélange final obtenu des corps de dimensions régulières et à plonger les corps ainsi obtenus dans un bain contenant de l'ordre de 2 à 15% en poids de calcium et de l'ordre de 10 à 35% en poids de sucre.

8. Procédé suivant la revendication 7, caractérisé en ce que lesdits corps sont formés par extrusion.

9. Procédé suivant la revendication 7, caractérisé en ce que lesdits corps sont formés par moulage.

10. Mélangeur statique pour la mise en oeuvre du procédé suivant l'une quelconque des revendications 5 à 9 et notamment destiné à assurer un mélange intime dudit premier mélange provenant d'une première cuve de stockage avec ledit deuxième mélange provenant d'une deuxième cuve de stockage, lesdits mélanges étant envoyés audit mélangeur sous une pression prédéterminée, caractérisé en ce qu'il comporte un corps cylindrique (10) fermé à ses extrémités par des embouts ou brides (11, 12) traversées par des canalisations d'arrivée (15, 18) des deux dits mélanges à combiner et qui comporte au voisinage de l'une de ses extrémités axiales, un raccord d'évacuation radial (23), les canalisations d'arrivée (15, 18, 19) traversant sensiblement toute la longueur du corps cylindrique (10) et portant à leurs extrémités libres situées l'une en regard de l'autre des buses d'injection (16, 20), la canalisation d'arrivée (18, 19) pour ledit deuxième mélange comportant au voisinage de son extrémité libre un ensemble de chicanes radiales (22) dont la chicane extrême (28) opposée à l'extrémité libre de la canalisation (19) communique avec ledit raccord d'évacuation radial (23) du corps cylindrique (10).

11. Mélangeur statique suivant la revendication 10, caractérisé en ce que les extrémités libres des canalisations d'arrivée (15, 18, 19) comportent chacune une paire de déflecteurs axiaux opposés (17, 21), les paires de déflecteurs (17, 21) étant décalées de 90° l'une par rapport à l'autre de sorte à délimiter une chambre de mélange dans laquelle débouchent lesdites buses (16, 20).

12. Mélangeur statique suivant la revendication 11, caractérisé en ce que les extrémités libres des déflecteurs (21) de l'une desdites paires de déflecteurs (17, 21) sont recourbées en direction de l'axe longitudinal de la canalisation d'arrivée correspondante (19).

13. Mélangeur statique suivant l'une quelconque des revendications 10 à 12, caractérisé en ce que ledit ensemble des chicanes comporte au moins trois disques (24, 26, 28) calés sur ladite canalisation d'arrivée (19), espacés les uns des autres axialement et dont le premier (24) présente au voisinage de son bord extérieur une série de perforations régulièrement espacées (25), le deuxième disque (26) présentant à son bord extérieur une série d'encoches radiales régulièrement espacées (27) tandis que le troisième disque (28) comporte une série d'encoches radiales (30) communiquant chacune avec une cavité radiale (29) s'étendant en regard de l'extrémité intérieure dudit raccord d'évacuation (23).

## Ansprüche

1. Lebensmittel im besonderem in der Form von Fruchtstücken, in der Art, die ein Fruchtkonzentrat und ein Geliermittel enthält, dadurch gekennzeichnet, daß es aus folgenden Bestandteilen besteht :
in der Größenordnung von 1 bis 30 Gewichtsprozent von Fruchtalkohol oder denaturiertem Alkohol,
in der Größenordnung von 15 bis 50 Gewichtsprozent von Fruchtkonzentrat,
in der Großenordnung von 5 bis 30 Gewichtsprozent von Zucker,
in der Größenordnung von 0,5 bis 3% von einem Alginat.

2. Lebensmittel nach Anspruch 1, dadurch gekennzeichnet, daß es außerdem eine Calciumverbindung wie ein wasserfreies Di-Kalziumphosphat in der Größenordnung von 0,2 bis 2 Gewichtsprozent enthält.

3. Lebensmittel nach irgendeinem der Ansprüche 1 und 2, dadurch gekennzeichnet, daß das Fruchtkonzentrat eine Fruchtpulpe ist.

4. Lebensmittel nach irgendeinem der Ansprüche 1 und 2, dadurch gekennzeichnet, daß das Fruchtkonzentrat ein Fruchtbrei ist.

5. Verfahren für die Zubereitung eines Lebensmittels nach irgendeinem der Ansprüche 1, 3 oder 4, dadurch gekennzeichnet, daß es folgende Phasen enthält : die Zubereitung eines denaturierten Alkohols mit einem Alkoholgehalt in der Größenordnung von 45 bis 55°, die Zubereitung eines ersten Gemisches, das den Alkohol, das Fruchtkonzentrat und einem Teil des Zuckers enthält, die Zubereitung eines zweiten Gemisches, däs das Alginat und den Restzucker enthält, dieses zweiten Gemisch während ca 30 Minuten entlüften und stehenlassen, und die Mischung des ersten Gemisches und des zweiten Gemisches in einem Mischervorrichtung mischen.

6. Verfahren nach Anspruch 5, dadurch gekennzeichnet, daß es darin besteht, bei der Zubereitung des Lebensmittels nach Anspruch 2, dem zweiten Gemisch die Calciumverbingung hinzufügen.

7. Verfahren nach Anspruch 5, dadurch gekennzeichnet, daß es darin besteht, aus diesem Endgemisch Körper von regelmäßigen Abmessungen zu erzeugen, und die in dieser Art erhaltenen Körper in einem Bad zu tauchen, das Calcium in der Größenordnung von 2 bis 15 Gewichtprozent und Zucker in der Größenordnung von 10 bis 35 Gewichtprozent enthält.

8. Verfahren nach Anspruch 7, dadurch gekennzeichnet, daß diese Körper durch Extrudieren geformt sind.

9. Verfahren nach Anspruch 7, dadurch gekennzeichnet, daß diese Körper durch Preß verfahren geformt sind.

10. Statischer Mischer für die Durchführung des Verfarens nach irgendeinem der Ansprüche 5 bis 0, der im besonderem dazu bestimmt ist, eine intensive Mischung des ersten Gemisches aus einem ersten Vorratsbehälters mit dem zweiten Gemische aus einem zweiten Vorratsbehälters, wobei diese Gemische dem Mischer im vorbestimmten Druck gefördert werden, zu gewährleisten, dadurch gekennzeichnet, daß er einem zylindrischen Körper (10) aufweist, der auf seinen Enden durch Ansätze oder Flansche (11, 12) geschlossen ist, welche von den Zuführungskanälen (15, 18) für diese zwei Gemische zu mischen durchgequert werden, und der, in der Nähe eines seinen Axialende, einen Radialablaufanschluß (23) aufweist, wobei die Zuführungskanäle (15, 18, 19) die Gesamtlänge des zylindrischen Körpers (10) durchqueren, und an ihren entgegengesetzten freien Enden Spritzdusen (16, 20) aufweisen, wobei der Zuführungskanal (18, 19) für dieses zweite Gemisch in der Nähre seines freien Ende einen Satz von Radialablenkblechen (22) aufweist, dessen Endablenkblech (28), das dem freien Zuführungskanalende (19) entgegengesetzt ist, mit diesem Radialablaufanschluß (23) des Zylindrikkörpers (10) in Verbindung steht.

11. Statischer Mischer nach Anpruch 10, dadurch gekennzeichnet, daß die freie Ende der Zuführungskanäle (15, 18, 19) jeweil ein Paar von entgegengesetzten Axialablenker (17, 21) aufweisen, wobei die Ablenkerpaare (17, 21) um 90° gegeneinander versetzt sind, um eine Mischkammer zu definieren, wo diese Spritzdusen (16, 20) einmünden

12. Statischer Mischer nach Anspruch 11, dadurch gekennzeichnet, daß die freie Ende der Ablenker (21) eines diesen Ablenkerpaare (17, 21) in der Richtung der Längsachse des entsprechen Zuführungskanal (19) gebogen sind.

13. Statischer Mischer nach irgendeinem der Ansprüche 10 bis 12, dadurch gekennzeichnet, daß dieser Ablenblechsatz wenigstens drei Scheiben (24, 26, 28) aufweist, die auf dieser Zuführungskanal (19) mit gegenseitigen Axialabstand festgeklemmt sind, wobei die erste Scheibe (24) in der Nähe ihrer Aussenkante eine Reihe von Lochungen im regelmäßigem Abstand (25) aufweist, die zweite Scheibe (26) an ihrer Außenkante eine Reihe von Radialausparrungen im regelmäßigem Abstand (27) aufweist und die dritte Scheibe (28) eine Reihe von Radialausparrungen (30) hat, die je mit einer Radialaushöhlung (29) in Verbindung steht, die sich jeweil vor dem Innenende dieses Ablaufanschlußes erstreckt.

## Claims

1. A food product, more particularly in the form of pieces of fruit, of the type comprising a fruit concentrate and a jellification agent, characterized in that it contains :
    in the order of 1-30% by weight of a fruit alcohol or denatured alcohol,
    in the order of 15-50% by weight of a fruit concentrate,
    in the order of 5-30% by weight of sugar,
    in the order of 0,5-3% by weight of an alginate

2. A product as claimed in claim 1, characterized in that it further comprises in the order of 0.2 to 2% by weight of a calcium compound such as an anhydrous dicalcic phosphate.

3. A product as claimed in either claims 1 or 2, characterized in that the fruit concentrate is a pulp of fruit.

4. A product as claimed in either claim 1 or 2, characterized in that the fruit concentrate is a compote of fruit.

5. A method for the preparation of a food product as claimed in either claims 1, 3 or 4, characterized in that it comprises the steps of preparing a denatured alcohol having a percentage of alcohol in the order of 45-55°, preparing a first mixture comprising the alcohol, the fruit concentrate and a portion of the sugar, preparing a second mixture comprising the alginate and the remaining sugar, and deaerating and allowing to stand the second mixture during approximately thirty minutes and mixing the first and the second mixtures in a mixer unit.

6. A method as claimed in claim 5, characterized in that, in preparing the product as claimed in claim 2, it consists in adding the calcium compound to said second mixture.

7. A method as claimed in claim 5, characterized in that it consists in obtaining bodies of uniform sizes from the resulting final mixture, and in immersing the resulting bodies in a bath comprising in the order of 2 15% by weight of calcium and in the order of 10-35% by weight of sugar.

8. A method as claimed in claim 7, characterised in that said bodies are extrusion bodies.

9. A method as claimed in claim 7, characterised in that said bodies are formed by moulding.

10. A static mixer for the implementation of the method claimed in any claim 5-9, and particularly designed to ensure a thorough mixing of said first mixture from a first storage container with said second mixture from a second storage container, characterised in that it comprises a cylindrical body (10) the ends of which are closed by joining pieces or flanges (11, 12), crossed by the supply conduits (15, 18) of said two mixtures to be blended, having a radial discharge coupling (23) in the vicinity of one of its axial ends, whereby the supply conduits (15, 18, 19) substantially cross the full length of the cylindrical body (10) and have injection nozzles (16, 20) at their free opposed ends, whereby the supply conduit (18, 19) for said second mixture, in the vicinity of its free end, have a set of radial baffles (22), the extreme end baffle (28) of which, as opposed to the free conduit (19) end, is conneted with said radial discharge coupling (23) of the cylindrical body (10).

11. A static mixer, as claimed in claim 10, characterised in that the free ends of the supply conduits (15, 18, 19) each comprise a pair of opposed axial deflectors (17, 21), whereby the pairs of deflectors (17, 21) are mutually 90° shifted in order to define a mixing chamber where said nozzles (16, 20) open.

12. A static mixer, as claimed in claim 11, characterised in that said free ends of delfectors (21) of one of said pairs of deflectors (17, 21) are bent back toward the longitudinal axis of the related supply conduit (10).

13. A static mixer, as claimed in any claim 10-12, characterized in that said set of baffles comprises at east three discs (24, 26, 28) fixed to said supply conduit (19), mutually axially spaced, and the first (24) of which comprises a series of regularly spaced perforations (25) in the vicinity of its outer edge, whereby the second disc (26) comprises a series of regularly spaced radial slots (27) while the third disc (28) comprises a series of radial slots (30) each connected with a radial recess (29) extending in front of the inner end of said discharge coupling (23).

# Planche unique

Figure unique